Europäisches Patentamt

European Patent Office

Office européen des brevets

(19)

(11) Veröffentlichungsnummer: **0 188 774**
**B1**

(12) # EUROPÄISCHE PATENTSCHRIFT

(45) Veröffentlichungstag der Patentschrift:
**31.05.89**

(21) Anmeldenummer: **85116231.3**

(22) Anmeldetag: **19.12.85**

(51) Int. Cl.⁴: **E 05 C 3/08, B 60 J 7/185**

(54) **Vorrichtung zur Verriegelung eines Dachlukendeckels des Fahrerhauses von Kraftfahrzeugen.**

(30) Priorität: **25.01.85 DE 3502485**

(43) Veröffentlichungstag der Anmeldung:
**30.07.86 Patentblatt 86/31**

(45) Bekanntmachung des Hinweises auf die Patenterteilung:
**31.05.89 Patentblatt 89/22**

(84) Benannte Vertragsstaaten:
**AT DE FR GB IT NL SE**

(56) Entgegenhaltungen:
**FR-A-1 305 160**

(73) Patentinhaber: **M.A.N. Nutzfahrzeuge GmbH, Dachauer Strasse 667 Postfach 50 06 20, D-8000 München 50 (DE)**

(72) Erfinder: **Schmidt, Werner, Vogelloh 54, D-8000 München 50 (DE)**
Erfinder: **John, Herbert, Vogelloh 62, D-8000 München 50 (DE)**
Erfinder: **Watzek, Gerhard, Eduard Spranger Strasse 34, D-8000 München 45 (DE)**

## Beschreibung

Die Erfindung bezieht sich auf die Verwendung einer bekannten Verriegelungseinrichtung nach FR-A-1 305 160.

Der Erfindung liegt die Aufgabe zugrunde, eine einfache und sichere Handhabung von Dachlukendeckeln bei Fahrerhäusern von Lkws zu ermöglichen.

Die Aufgabe wird erfindungsgemäß durch den Anspruch 1 gelöst.

Solcherart kann die Dachluke sowohl vom Fahrer wie und vom Beifahrer während der Fahrt ohne Sicherheitsrisiko geöffnet oder geschlossen werden. Bei Schwerkraftstellung des Hebels, nämlich vertikal, ist der Dachlukendeckel von außen nicht zu öffnen, und es kann eine Offenstellung nur gezielt vom innen erreicht werden. Somit ist Einbruchgefaht von dieser Seite ausgeschlossen. Weiterhin wird der Fahrerhaus innenraum durch in einer Vertiefung des Lukendeckels liegenden Hebel nicht störend beeinträchtig, das betrifft sowohl die Optik wie auch den Schutz von Fahrer und Beifahrer.

Der Verriegelungsstift ist erst aus der kraftschlüssigen Verbindung mit dem Exzenterhaken herausgelöst, wenn der Hebel nach unten in annähernd senkrechter Stellung geschwenkt wird. In dieser Stellung kann der Lukendeckel direkt mit Hilfe des Hebels hochgestoßen werden, die Bedienungsperson braucht dabei nicht so hoch hinreichen, wie es bei üblichen Vorrichtungen der Fall ist.

Gemäß der Erfindung wird die Freigabe des Verriegelungsstiftes erst bei einer Schwenkbewegung von über 90° aus der Vertiefung des Deckels heraus zugelassen. Hierdurch wird verhindert, daß ebenfalls bei eventueller, unbeabsichtigter senkrechter Schwenkstellung des Hebels das Öffnen des Lukendeckels von außen nicht möglich ist. Hierbei ist es von Vorteil, wenn das freie Ende des Exzenterhakens an der Gleitfläche für den Verriegelungsstift eine Verdickung aufweist, um damit sicherzustellen, daß das Öffnen des Lukendeckels von außen auch bei großer Kraftanwendung nicht möglich ist, nachdem der Stift die Erhöhung zunächst überwinden muß und dieses kann nur durch Betätigung des Hebels geschehen.

Die Erfindung wird anhand eines in der Zeichnung schematisch dargestellten Ausführungsbeispieles näher beschrieben.

Fig. 1    zeigt die Vorrichtung in verriegelter Stellung und
Fig. 2    in entriegelter Stellung.

Die Vorrichtung besteht aus einem verkürzt dargestellten Hebel 10, das in der Schließ- bzw. verriegelten Stellung horizontal parallel zur Längsachse des Fahrzeugs verankert ist. Der Hebel 10 ist an einem Ende 12 am Dachlukendeckel 13 schwenkbar angelenkt. An diesem Ende ist der Hebel mit einem Exzenterhaken 14 ausgestattet, der eine Gleitfläche 15 für einen Verriegelungsstift 16 hat. Der Verriegelungsstift ist gestellfest mit dem Lukenrahmen 17 verbunden.

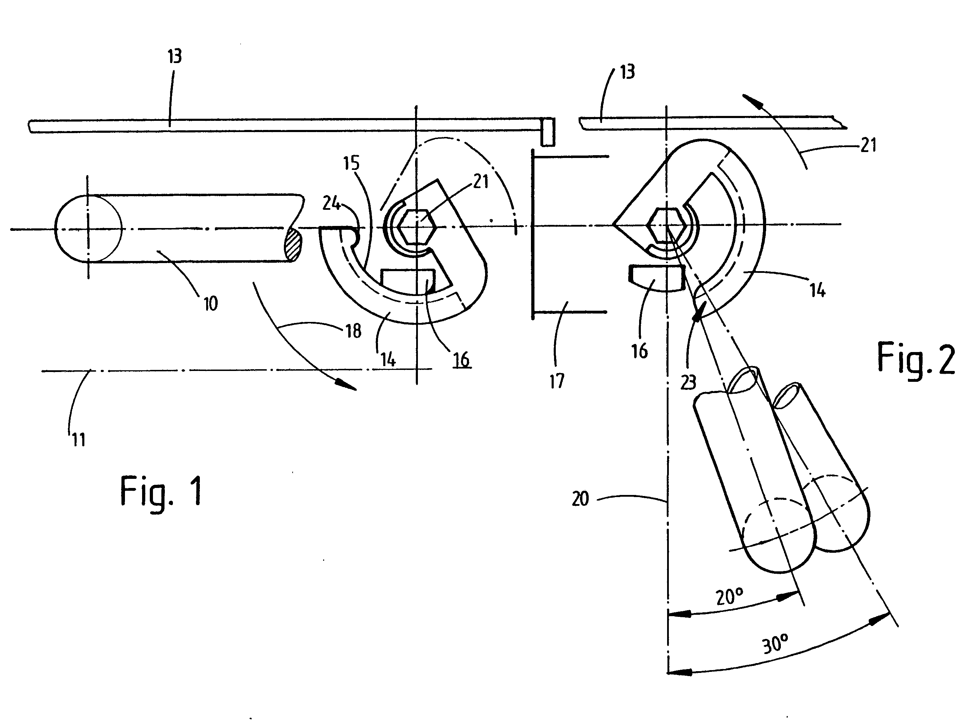

In der in Fig. 1 dargestellten Stellung verhindert der Verriegelungsstift 16 durch dessen kraftschlüssige Verbindung mit der Gleitfläche 15 des Exzenterhakens 14 eine Aufwärtsbewegung der aus dem Dachlukendeckel 13 und dem Hebel 10 bzw. dem Exzenterhaken 14 bestehende Baueinheit. Ein Öffnen des Dachlukendeckels 13 ist bei dieser Hebelstellung unmöglich.

Bei in Fahrtrichtung hinten angeordneter Verriegungsvorrichtung ist die Vorrichtung aufgrund des längeren Hebels 10 auch bei großen Lastkraftfahrerhäusern gut erreichbar. Soll die Dachluke geöffnet werden, so schwenkt die Bedienungsperson den Hebel 10 in Pfeilrichtung 18 nach unten um einen Winkel, der die Senkrechtstellung 20 um etwa 20° übersteigt. Der Exzenterhaken 14 ist so lang ausgebildet, daß er in dieser, in Fig. 2 dargestellten Stellung den Verriegelungsstift völlig freigibt und ungehindert gemäß Pfeilrichtung 21 nach oben verschiebbar ist. Die Entriegelung bei einer Schwenkbewegung von über 90° soll verhindern, daß bei unbeabsichtigten "Herunterfallen" des Hebels 10 in die vertikale 20 Stellung, eine Öffnung des Dachlukendeckels 13 von außen möglich ist. In dieser Stellung nämlich ragt das freie Ende 23 des Exzenterhakens 14 noch unter den Verrieglungsstift 16. Soll absolut sichergestellt werden, daß bei einer vertikalen Stellung des Hebels 10 trotz großer Kraftanwendung von außen eine Entriegelung nicht erfolgen kann, so kann an der Gleitfläche 15 eine Verdickung 24 vorgesehen werden, die mittels eines längeren Hebels 10 leicht, jedoch bei Kraftanwendung am Deckel 13 direkt nicht überwindbar ist.

Die Gleitfläche 15 ist so ausgebildet, daß sie beim Betätigen des Hebels 10 in Verriegelungs- bzw. Schließstellung den Dachlukendeckel 13 sich gegen den Verriegelungsstift 16 abstützend an den Lukenrahmen 17 andrückt.

## Patentansprüche

1. Verwendung einer Verriegelungsvorrichtung bestehend aus einem Flügel (13) und einem Rahmen, mit einem am Flügel (13) schwenkbar befestigten, mit einem Griff (10) versehenen Exzenterhaken (14), der einen mit dem Rahmen fest verbundenen Verriegelungsstift (16) wahlweise schließbar umgreift, wobei der Griff (10) in seiner Schließstellung in etwa parallel zum Flügel (13) einliegt und das freie Ende (23) des Exzenterhakens derart zum Verriegelungsstift (16) angeordnet ist, daß die Freigabe des Verriegelungstifftes (16) erst bei einer Schwenkbewegung von über 90° aus der Schließstellung heraus erfolgt, für die Verriegelung des Dachlukendeckels des Fahrerhauses von Lastkraftwagen.

2. Vorrichtung nach Anspruch 1, dadurch gekennzeichnet, daß das freie Ende (23) des Exzenterhakens (14) derart zum Verriegelungsstift (16) angeordnet ist, daß eine Freigabe des Verriegelungsstifts (16) erst nach Überschreitung der Senkrechtstellung des Hebels (10) um etwa 20 erfolgt.

3. Vorrichtung nach Anspruch 1 oder 2, dadurch gekennzeichnet, daß das freie Ende (23) des Exzenterhakens (14) an der Gleitfläche (15) für den Verriegelungsstift (16) eine Verdickung (24) aufweist.

## Claims

1. The use of a locking device comprising a wing (13) and a frame, with an eccentric catch (14), which is pivotably secured to the wing (13), which is provided with a handle (10) and which selectively encloses a locking pin (16) in a lockable manner which is rigidly connected to the frame, the handle (10) lying approximately parallel to the wing (13) in its closed position and the free end (23) of the eccentric catch being arranged relative to the locking pin (16) such that the release of the locking pin (16) is only effected upon a pivoting movement of over 90° out of the closing position, for locking the roof aperture cover of a lorry cub.

2. A device according to claim 1, characterised in that the free end (23) of the eccentric catch (14) is arranged relative to the locking pin (16) such that a release of the locking pin (16) is only effected after the vertical position of the lever (10) has been exceeded by approximately 20°.

3. A device according to claim 1 or 2, characterised in that the free end (23) of the eccentric catch (14) comprises an enlarged portion (24) on the sliding surface (15) for the locking pin (16).

## Revendications

1. Utilisation d'un dispositif de verrouillage constitué d'un panneau (13) et d'un châssis, avec un crochet à excentrique (14) monté à pivot sur le panneau (13) et muni d'une poignée (10), ce crochet engrenant sélectivement pour la fermeture avec une tige de verrouillage (16), la poignée (10) venant dans sa position de fermeture se placer de façon sensiblement parallèle au panneau (13) et l'extrémité libre (23) du crochet à excentrique étant disposée par rapport à la tige de verrouillage (16) de manière que la libération de cette tige de verrouillage (16) n'ait lieu que pour un mouvement de pivotement de plus de 90° à partir de la positon de fermeture, pour le verrouillage du panneau d'ouverture de toit de la cabine de conduite de camions.

2. Dispositif selon la revendication 1, caractérisé en ce que l'extrémité libre (23) du crochet à excentrique (14) est disposée par rapport à la tige de verrouillage (16) de manière que la libération de cette tige de verrouillage (16) n'ait lieu que lorsque la position verticale du levier (10) est dépassée de 20 environ.

3. Dispositif selon la revendication 1 ou 2, caractérisé en ce que l'extrémité libre (23) du crochet à excentrique (14) comporte une partie épaissie (24) sur la surface de glissement (15) destinée à la tige de verrouillage (16).

Fig. 1

Fig. 2

13

15

24

21

10

18

14

16

11

17

13

21

14

16

23

20

20°

30°

EP 0 188 774 B1